# EUROPÄISCHE PATENTSCHRIFT

(11) **EP 2 804 467 B1**
(45) Veröffentlichungstag und Bekanntmachung des Hinweises auf die Patenterteilung: **11.03.2020**
(21) Anmeldenummer: 13700331.5
(22) Anmeldetag: 17.01.2013
(51) Int. Cl.: A01G 13/08

(54) **FREILANDGEBLÄSE**
WIND MACHINE
DISPOSITIF DE VENTILATION

(30) Priorität: 20.01.2012 DE 102012200860; 01.06.2012 DE 202012102018 U
(43) Veröffentlichungstag der Anmeldung: 26.11.2014
(73) Patentinhaber: Pleger, Fritz, 50374 Erftstadt (DE); BSR RÜZGAR San. Mac. Tic. Ltd. Sti., Seyhan, Adana (TR)
(72) Erfinder: BECKER, Georg, 50374 Erftstadt (DE)
(74) Vertreter: Freischem & Partner Patentanwälte mbB
(86) Internationale Anmeldenummer: PCT/EP2013/050829
(87) Internationale Veröffentlichungsnummer: WO 2013/107813

(56) Entgegenhaltungen:
- DE-A1-102010 009 176
- US-A- 5 244 346
- US-B1- 6 173 810

## Beschreibung

Die Erfindung betrifft ein Gebläse zum Schutz landwirtschaftlicher Anlagen gemäß dem Oberbegriff des Patentanspruchs 1.

Gebläse, die dem Schutz von Anpflanzungen auf Freiland dienen, sind aus dem Stand der Technik bekannt. Beispielsweise beschreibt die DE 27 06 225 A1 ein derartiges Gebläse. Derartige Gebläse werden auch Windmaschinen genannt und dienen dem Schutz von Obstbäumen, Weinpflanzen und anderer Pflanzen gegen Frostschäden oder andere schädliche Klimaeinflüsse. Insbesondere im Frühjahr nach der Blüte der Anpflanzungen kann Frost in Bodennähe bei diesen erhebliche Schäden hervorrufen. Diese Schäden können dadurch vermieden werden, dass durch ein Gebläse ein Luftstrom erzeugt wird, der die die Pflanzen umgebende Atmosphäre verwirbelt und eine auf die Pflanzen niedersinkende Kaltluftschicht verteilt. Hierdurch wird es möglich, einen großen Teil der Frostschäden von den Pflanzen abzuwenden. Um in großen Plantagen in einem hinreichend großen Gebiet die gewünschten Verwirbelungen zu erzeugen, müssen Freilandgebläse eine beträchtliche Größe aufweisen. Eine Höhe der Tragsäule für den Rotor von 10 m sowie ein Rotordurchmesser von 3 m und mehr sind durchaus üblich. Die genannte Offenlegungsschrift beschreibt einen Rotor auf einer starren Tragsäule, der über einen Antriebsmotor im Fuß der Säule betrieben wird. Das Drehmoment des Antriebsmotors wird über eine innerhalb der Säule verlaufende Antriebswelle auf den am oberen Ende der Tragsäule befestigten Rotor übertragen.

Da Freilandgebläse in den meisten Fällen nur während eines kurzen Zeitraums eingesetzt werden, nämlich im Frühjahr oder im Herbst, wenn die Temperaturen sich nahe dem Gefrierpunkt befinden, wurde auch vorgeschlagen, die Rotoren der Freilandgebläse auf versenkbaren Säulen anzubringen. Derartige Vorschläge gehen beispielsweise aus den Druckschriften JP 200100055 A, JP 2002247923 A, JP 11062884 A und JP 4791790 B2 hervor. Die Tragsäulen bestehen hier aus mehreren ineinander geschobenen Segmenten, die zur Verlängerung der Länge der Tragsäulen in axialer Richtung zueinander verschiebbar sind. Solange das Gebläse nicht benötigt wird, sind die Segmente ineinander und in ein tiefes Loch im Boden geschoben. Der Rotor des Gebläses kann in Bodennähe oder auf dem Boden abgesenkt werden. Zur Verwendung des Gebläses kann die Tragsäule auf ihre maximale Länge ausgezogen werden.

Die Druckschrift US 5,244,346 A zeigt eine bewegliche Windmaschine mit einer oder zwei teleskopierbaren Tragsäulen, die auf einem Fahrgestell eines Anhängers montiert sind. Der Anhänger weist Stützfüße auf, um während des Betriebs des Gebläses einen stabileren Stand zu gewährleisten. Zwei der Stützfüße am hinteren Ende des Anhängers scheinen ausziehbar zu sein, um die Standfläche des Anhängers zu verbreitern. Der Anhänger hat nur eine begrenzte statische Stabilität, da seine Grundfläche durch die maximal zulässige Breite und Länge von für den Straßenverkehr zugelassenen Anhängern beschränkt ist.

Aus den Druckschriften US 6,173,810 B1 und DE 10 2010 009 176 A1 sind Sonderfahrzeuge, nämlich eine Hubarbeitsbühne einerseits und eine Autobetonpumpe andererseits bekannt, die verschwenkbare Beine aufweisen.

Aufgabe der Erfindung ist es, ein Gebläse mit einem neuartigen Gestell zu schaffen, welches transportabel ist, aber bei großer Höhe des Gebläserotors äußerst sicher und standfest ausgebildet ist.

Diese Aufgabe wird erfindungsgemäß durch die Gesamtheit der Merkmale des Patentanspruchs 1 gelöst.

Das Gestell für das Gebläse weist ein Basisgestell auf, in dessen mittlerem Bereich die teleskopierbare Tragsäule befestigt ist und an dem vier Beine schwenkbar befestigt sind.

Durch das schwenkbare Befestigen der Beine lässt sich die Grundfläche des Gestells ganz erheblich reduzieren.

In der Praxis können die Beine aus einer Betriebsstellung, in der sie sich nahezu waagerecht und in der Ebene des Basisgestells erstrecken, in eine Lagerstellung verschwenk bar sein, in der die Beine so weit wie möglich an die Tragsäule herangezogen sind. In der Betriebsstellung ragen die Beine um ihre gesamte Länge von dem Mittelpunkt des Basisgestells fort nach außen. Die Enden der Beine stehen mit Stützfüßen auf dem Boden auf, die in dieser Stellung der Beine einen maximalen Abstand zueinander haben. Bei eingeschwenkten Beinen hat das Gestell eine sehr viel kleinere Breite und kann auf Rädern befestigt werden, um über Wege und Straßen transportiert zu werden. Bei einem quadratischen Basisgestell mit einer Länge und Breite von ca. 2,5 m und einer Beinlänge von 2,5 m ergibt sich ein Abstand zwischen den Stützfüßen von etwa 8 m. Dieser Abstand reicht in den meisten Fällen aus, um dem Gestell die erforderliche Standfestigkeit zu verleihen.

Wenn höhere Standfestigkeit erwünscht ist, können die Beine längenverstellbar ausgebildet sein. Bei Beinen, die in eine Position möglichst nahe an der Tragsäule geschwenkt sind und ggf. auf minimale Länge reduziert sind, entspricht die Grundfläche des Gestells für das Gebläse im Wesentlichen der Grundfläche des Basisgestells. Die Höhe des Gestells, welche in vollständig ausgefahrenem Zustand in der Größenordnung von 9-15 m liegt, kann in zusammengelegtem Zustand auf unter 3 m reduziert werden. Das Basisgestell kann beispielsweise eine Länge und Breite von etwa 2,50 m aufweisen. In diesem zusammengelegten Zustand ist das Gestell ohne weiteres mittels eines Tiefladers oder eines geeigneten Anhängers transportierbar.

Durch die aufschwenkbaren und ggf. aufspreizbaren Beine lässt sich die Aufstandfläche des Gestells im Gebläsebetrieb ganz erheblich vergrößern. Jedes Bein kann aus mehreren Segmenten bestehen und auf eine Länge von beispielsweise 4-5 m ausgezogen werden. Ein vierbeiniges Gestell stützt sich so an den vier Eckpunkten eines Quadrats mit einer Länge und Breite von über 8 m ab, wobei der Abstand der einander diametral gegenüberliegenden Stützfüße über 11 m beträgt. Selbst bei einfachen, nicht teleskopierbaren Beinen mit einer Beinlänge von ca. 2,50 m ergeben sich mit dem Basisgestell mit der Breite von etwa 2,50 m vier Stützpunkte an den vier Eckpunkten eines Quadrats mit einer Länge und Breite von etwa 6 m.

Ein derartiges Gestell ist sehr stabil und auch bei hohen, durch den Rotor erzeugten Windkräften absolut standfest. Das Gestell kann widerstandsfähig genug ausgebildet werden, um in einer bevorzugten Ausführungsform den Rotor zusammen mit dem Antriebsmotor für den Rotor des Gebläses zu tragen. Trotz der beachtlichen Bauhöhe im Betriebszustand in der Größenordnung von 10 bis 15 m ist für ein derartiges mobiles Freilandgebläse keinerlei Baugenehmigung erforderlich.

Die längenverstellbaren Beine können aus mehreren ineinander geschobenen Beinsegmenten bestehen, die zur Verlängerung der Beinlänge in axialer Richtung zueinander verschiebbar sind. In diesem Fall sind die Beine wie die Tragsäule teleskopierbar ausgebildet.

Sowohl die Segmente der Tragsäule als auch die Beinsegmente können in der Praxis aus rohrförmigen Hohlprofilen aus Stahl bestehen. Um die durch den Rotor erzeugten Kräfte und Momente des Gebläses aufzunehmen, müssen diese Profile eine erhebliche Wandstärke von mehreren mm aufweisen. Hieraus ergibt sich ein Gewicht, das ein manuelles Verschieben der Segmente zueinander schwierig oder unmöglich macht. In der Praxis kann das Gestell daher mindestens eine Antriebsvorrichtung aufweisen, die die Segmente der Tragsäule zueinander verschiebt und/oder die Beinsegmente des Beins zueinander verschiebt und/oder die Schwenkstellung des Beins verändert.

Eine derartige Antriebsvorrichtung ist beispielsweise ein Hydraulikzylinder. Vorzugsweise werden alle Segmente zueinander mittels Hydraulikzylindern verschoben und die Beine mittels Hydraulikzylindern verschwenkt. In diesem Fall ist eine einzige Antriebspumpe zur Erzeugung des hydraulischen Drucks ausreichend, wobei das mit Druck beaufschlagte Hydraulikfluid über geeignete Steuerventile zu den verschiedenen Antriebszylindern für die Beine und Beinsegmente bzw. die Tragsäulensegmente geleitet werden kann.

Ferner kann mindestens ein Bein in der Praxis einen höhenverstellbaren Stützfuß aufweisen. Eine Antriebsvorrichtung kann die Verstellung der Position des höhenverstellbaren Stützfußes bewirken. Insbesondere können alle Stützfüße des Gestells über kleine Hydraulikzylinder an den Enden der Beine befestigt werden, die über eine speicherprogrammierbare Steuerung (SPS) angesteuert werden. Mit dieser Anordnung kann das Gestell an jedem Aufstellungsort waagerecht ausgerichtet werden, auch wenn die Aufstandspunkte der Stützfüße nicht in einer waagerechten Ebene liegen.

Die Position der Segmente der Tragsäule zueinander und die Position der Beinsegmente des Beins zueinander sowie die Schwenkstellung des Beins werden durch Sicherheitsventile arretiert, welche einen erreichten Druck innerhalb der Hydraulikzylinder sicherstellen. Zusätzlich können mechanische Arretierelemente wie Bolzen, die durch miteinander fluchtende Löcher von zueinander beweglichen Teilen gesteckt werden, verwendet werden. In der Regel dürfte aber die Arretierung durch das Hydraulikfluid ausreichend sein.

In der Praxis kann das obere Segment der Tragsäule nahe dem oberen Ende eine Aufnahme für einen Antriebsmotor aufweisen, der den Gebläserotor antreibt. Die Anordnung des Antriebsmotors am oberen Ende der teleskopierbaren Tragsäule ist sinnvoll, da eine längenverstellbare Antriebswelle innerhalb der teleskopierbaren Tragsäule äußerst schwierig zu realisieren ist. Auf der Tragsäule können beliebige Antriebsmotoren montiert werden. Besonders robust und praxistauglich sind stationäre Dieselmotoren. Diese haben bei einer hinreichenden Leistung von 60 bis 250 kW ein Gewicht von 300 bis 800 kg. Der Vorteil von stationären Dieselmotoren liegt darin, dass sie über einen einfachen Dieseltank mit Kraftstoff versorgt werden können und nicht mit anderen Versorgungsleitungen gekoppelt werden müssen. Sie sind folglich örtlich vollständig unabhängig.

Alternativ kann ein Elektromotor oder eine Gasturbine für den Antrieb des Gebläserotors verwendet werden. Deren Versorgung mit Strom oder Gas ist allerdings deutlich aufwendiger als die Kraftstoff-Versorgung eines Verbrennungsmotors.

Wie bereits erwähnt, kann die maximale Höhe der Tragsäule z.B. zwischen 6 m und 15 m liegen. Der maximale Abstand des Endes eines teleskopierbaren Beins von der Mitte des Basisgestells kann zwischen 4 m und 8 m liegen. Dagegen kann die minimale Höhe der Tragsäule in zusammengeschobenem Zustand zwischen 2 m und 3,5 m liegen. Die minimale Länge und Breite der Grundfläche des Basisgestells kann zwischen 2 m und 3 m liegen. Ein derartiges Gestell ist ohne weiteres durch ein Fahrzeug im Straßenverkehr zu transportieren. Auf einem Anhänger, insbesondere einem Tieflader, können mehrere derartige Basisgestelle gleichzeitig transportiert werden. Während die auf einem Anhänger fest montierten Gebläse der US 5,244,346 B jeweils einzeln von einem Fahrzeug an den Einsatzort gefahren werden müssen, können mehrere der hier beschriebenen Gestelle gleichzeitig an den Einsatzort transportiert werden. Hierdurch werden Zeit und Transportkosten gespart. Ein weiterer Vorteil liegt darin, dass das Basisgestell selbst als Rahmen eines Fahrzeugs verwendet werden kann, an den lediglich Räder angebracht werden müssen, um das Basisgestell mit den gesamten Aufbauten zu transportieren.

Die Aufnahme für den Antriebsmotor und den Rotor des Gebläses kann in der Praxis um die Hochachse drehbar und zur Horizontalen schwenkbar ausgebildet sein. Die Aufnahme kann ein Drehlager aufweisen, welches eine Drehung des Antriebsmotors in Bezug auf die Tragsäule ermöglicht. Auf diese Weise kann die Windröhre, die durch den Gebläserotor erzeugt wird, über eine große kreisförmige Fläche um die Tragsäule herum gerichtet werden. Ferner kann ein Schwenklager für die Aufnahme vorgesehen sein, welches ein Verschwenken des Antriebsmotors in Bezug auf die horizontale Ebene ermöglicht. Das Schwenklager erlaubt es, die Achse der erzeugten Windröhre in Bezug auf die horizontale Ebene um bis zu 45° zu verschwenken, so dass die Windröhre an einem gewünschten Ort auf den Boden trifft. Ferner kann in der Praxis ein Drehantrieb vorgesehen sein, der eine Drehung des Antriebsmotors in Bezug auf die Tragsäule bewirkt. Ein Schwenkantrieb kann das Verschwenken des Antriebsmotors in Bezug auf die horizontale Ebene bewirken. Diese Antriebe können während des Betriebs des Gebläses über eine speicherprogrammierbare Steuerung (SPS) gesteuert werden, so dass das Gebläse ein besonderes, auf den jeweiligen Einsatzort abgestimmtes Programm abfährt. Wenn bestimmte empfindliche Bepflanzungen in der Nähe des Gebläses angeordnet sind, kann der Schwenkantrieb so programmiert werden, dass die Windröhre auf diese Bepflanzungen gerichtet ist. Die Luftverwirbelung wird in diesem Bereich dann am stärksten sein. Das Gebläse kann auch während des Betriebs um die Tragsäule gedreht werden, damit die gesamte Fläche um die Tragsäule behandelt wird. Während dieser Drehbewegung können sich die Positionen empfindlicher Bepflanzungen abhängig vom jeweiligen Drehwinkel des Gebläses ändern. Folglich kann eine bestimmte Schwenkstellung jedem Drehwinkel zugeordnet werden, so dass während einer Umdrehung um die Achse der Tragsäule das Gebläse unterschiedliche vorbestimmte Schwenkstellungen einnimmt. Zusätzlich kann es erforderlich sein, in bestimmten Drehpositionen die Gebläseleistung zu drosseln, z.B. wenn in der entsprechenden Richtung Luftverwirbelung nicht oder nur in geringem Abstand zur Tragsäule gewünscht ist. In diesem Fall kann der Drehantrieb der Gebläseaufnahme mit der Motorsteuerung gekoppelt werden, so dass der Motor abhängig von der Drehposition zum Beispiel auf unterschiedliche Drehzahlen eingestellt wird.

Das Basisgestell kann in der Praxis ferner mindestens ein Hohlprofil aufweisen, wobei mindestens eine Strebe in das Hohlprofil einsteckbar und dort arretierbar ist. Mittels der Strebe können hilfreiche Zusatzbauteile und Zusatzaggregate angeschlossen werden. Zum Beispiel kann die mindestens eine Strebe ein Laufrad aufweisen, mit dem das Gestell verfahrbar ist. Sinnvollerweise werden zwei Laufräder an zwei parallelen Hohlprofilen des Basisgestells mittels Streben befestigt. Auf diese Weise können an dem Basisgestell zum Beispiel zwei Räder mit einer gemeinsamen Achse befestigt werden. An einer weiteren Strebe, die auf der Seite eingesteckt wird, die den Streben mit den Laufrädern gegenüberliegt, kann eine Deichsel befestigt sein, die mit einem Zugfahrzeug, zum Beispiel einem Traktor, verbindbar ist, so dass das Gestell gezogen werden kann. Die Deichsel kann in der Praxis mit zwei parallelen Streben verbunden sein, so dass sie stabil an dem Basisrahmen befestigbar ist. Die mittels der Streben befestigten Zusatzbauteile können weitere vorteilhafte Merkmale aufweisen. Beispielsweise kann durch einen Antrieb wie z.B. einen Hydraulikzylinder das automatische Anheben und Absenken des Basisgestells bewirkt werden, so dass das Basisgestell von der Transportstellung mindestens 10 cm über dem Boden in seine Lager- oder Einsatzstellung verbracht werden kann, indem die Räder entlastet sind und das Gestell sich direkt auf dem Boden abstützt. Zwei parallele Streben mit zwei Rädern können miteinander verbunden werden, so dass eine vollständige Achs-Anordnung entsteht, die durch Einstecken der Streben in zwei parallele Hohlprofile des Basisgestells befestigt werden kann. Falls am vorderen und hinteren Ende des Basisgestells eine Achse angeordnet wird, kann eine der zwei Achsen lenkbar ausgebildet sein. Insbesondere kann die Vorderachse mit der Deichsel gekoppelt sein, so dass eine Bewegung der Deichsel einen Lenkeinschlag der vorderen Räder zur Folge hat.

An einer Strebe kann ferner ein weiterer Strebenabschnitt angeordnet sein, der in das Hohlprofil eines zweiten Basisgestells einsteckbar und dort arretierbar ist. Auf diese Weise können zwei oder mehrere Basisgestelle mittels Verbindungsstreben miteinander verbunden und gemeinsam transportiert werden.

Aufgrund der Transportfähigkeit des Gestells und des Gebläses ist es nicht erforderlich, die optisch wenig attraktiven und bei der Arbeit in der Anpflanzung störenden Gebläse während des ganzen Jahres in den Anpflanzungen stehen zu lassen. Sie können nach der kritischen Temperaturperiode aus den Anpflanzungen entfernt und in entsprechende Lagerhallen eingelagert werden. Dort lassen sich die Gebläserotoren und die Antriebsmotoren auch besser warten als im freien Gelände.

Ferner ist es möglich, die Gestelle flexibel an die örtlichen Gegebenheiten und die aktuelle Bepflanzungssituation anzupassen. Gegenüber einem Gebläse mit Fahrgestell hat das Gebläse mit dem beanspruchten Gestell eine sehr viel höhere Standsicherheit und folglich Betriebssicherheit. Die Anpassung an von der waagerechten abweichenden Aufstandsebenen ist ebenfalls ein erheblicher Vorteil.

Wie oben erwähnt, kann der Antriebsmotor des Gebläses an einer Aufnahme am oberen Ende des oberen Segments der Tragsäule befestigt sein. Der Gebläserotor kann entweder auf der Motorwelle angeordnet sein oder über ein Getriebe mit der Motorwelle verbunden sein.

Der Gebläserotor kann auf einer Hohlwelle befestigt sein, wobei über eine Zufuhrleitung ein Fluid in diese Hohlwelle geleitet werden kann. Das Fluid kann auf der Abströmseite aus der Hohlwelle austreten und so der durch den Rotor erzeugten Windröhre beigemischt werden. Auf diese Weise kann zum Beispiel angewärmtes Wasser der von dem Gebläse erzeugten Windröhre zugeführt werden, welches zusätzlich vor Frostschäden an den Pflanzen im Bereich der Windröhre des Gebläses schützt. Ferner können Nährstoffe oder Mittel zur Behandlung der Pflanze dem Luftstrom des Gebläses beigemischt werden.

Der Durchmesser des Gebläserotors kann zwischen 1,5 m und 5 m liegen.

In der Praxis ist es vorteilhaft, wenn aufeinander folgende Rotorblätter des Gebläserotors verschiedene Anstellwinkel aufweisen. Hierdurch entstehen ein ruhiger Gebläsebetrieb und eine Windröhre, die noch in großen Abständen zum Gebläserotor sehr hohe Strömungsgeschwindigkeiten aufweist.

Der Antriebsmotor kann auch eine Kombination aus mehreren Motoren, insbesondere aus Verbrennungsmotor und Elektromotor sein. Mittels eines Getriebes kann dann der Gebläserotor wahlweise entweder mit dem Verbrennungsmotor oder mit dem Elektromotor gekoppelt werden. Wenn ein besonders großes Drehmoment erforderlich ist, kann der Gebläserotor auch mit beiden Motoren gekoppelt werden. Insbesondere ist es auch möglich, den Gebläserotor mit dem Elektromotor zu koppeln und die Steuerungselektronik des Elektromotors so einzustellen, dass der Motor als Generator läuft und Strom erzeugt. So kann mit dem Freilandgebläse in Zeiten, in denen kein Luftstrom erzeugt werden muss, durch Wind mittels des Gebläserotors und des als Generator laufenden Elektromotors Strom erzeugt werden. Sonnvollerweise ist die Steuerungselektronik des Elektromotors in diesem Fall mit dem Stromnetz oder mit einem Energiespeicher verbunden, so dass der erzeugte Strom entweder abtransportiert oder zwischengespeichert werden kann.

Eine Ausführungsform der Erfindung wird nachfolgend unter Bezugnahme auf die beigefügten Zeichnungen beschrieben.
Fig. 1 zeigt eine perspektivische Darstellung eines vollständig aufgespreizten Gestells für ein Freilandgebläse.
Fig. 2 zeigt eine Seitenansicht des Gestells aus Figur 1.
Fig. 3 zeigt eine Draufsicht auf das Gestell aus Figur 1.
Fig. 4 zeigt eine perspektivische Darstellung des zusammengelegten Gestells aus den vorangehenden Figuren,
Fig. 5 zeigt eine Seitenansicht des zusammengelegten Gestells aus Figur 4.
Fig. 6 zeigt schematisch das auf dem Gestell angeordnete Gebläse mit Antriebsmotor und Rotor.
Fig. 7 zeigt die Kontur eines Rotorblatts des Gebläses.
Fig. 8 zeigt das Profil des Rotorblatts aus Figur 7 an seinem äußeren, freien Ende.
Fig. 9 zeigt schematisch die Anstellwinkelvariation dreier aufeinander folgender Rotorblätter.
Fig. 10 zeigt eine alternative Ausführungsform des Endes eines Beins des Gestells aus den Fig. 1 bis 5 mit höhenverstellbarem Stützfuß.
Fig. 11 zeigt eine Draufsicht auf das Gestell mit Laufrädern.
Fig. 12 zeigt eine Seitenansicht des Gestells aus Fig. 11.
Fig. 13 zeigt eine Draufsicht mehrerer miteinander verbundener Gestelle mit einem Fahrwerk.
Fig. 14 und Fig. 15 zeigen das obere Segment der Tragsäule mit Schwenk- und Drehlager in zwei unterschiedlichen Schwenkpositionen.
Fig. 16 zeigt einen Hybridantrieb für den Gebläserotor, bestehend aus einem Elektromotor und einem Verbrennungsmotor.
Fig. 17 zeigt eine der Fig. 4 entsprechende Darstellung einer Ausführungsform des Gestells für ein Freilandgebläse mit nicht-teleskopierbaren Beinen.
Fig. 18 zeigt das Gestell aus Fig. 17 in vollständig aufgespreizter Stellung.

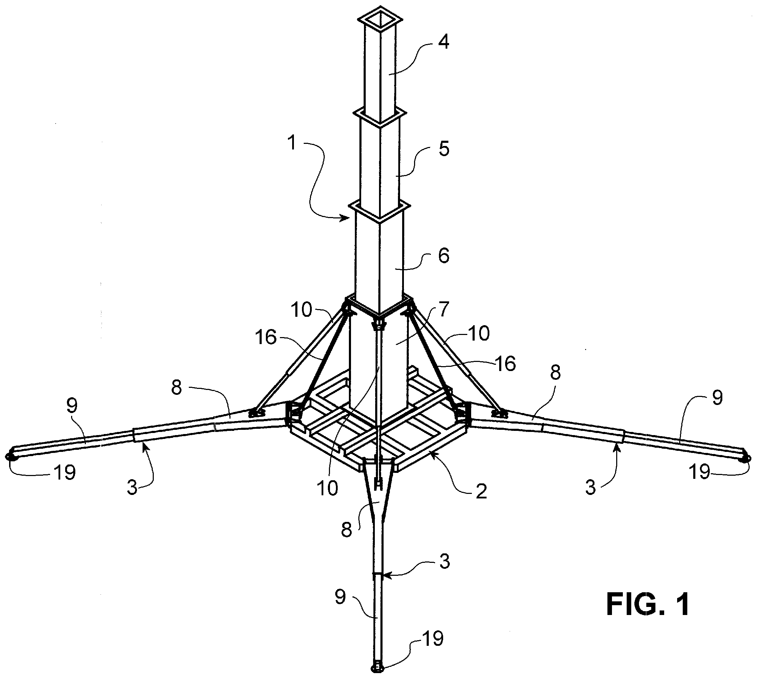

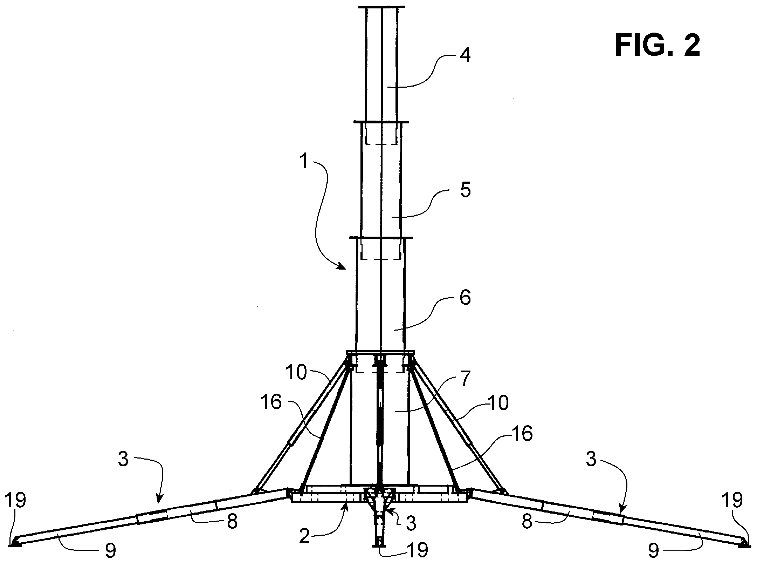

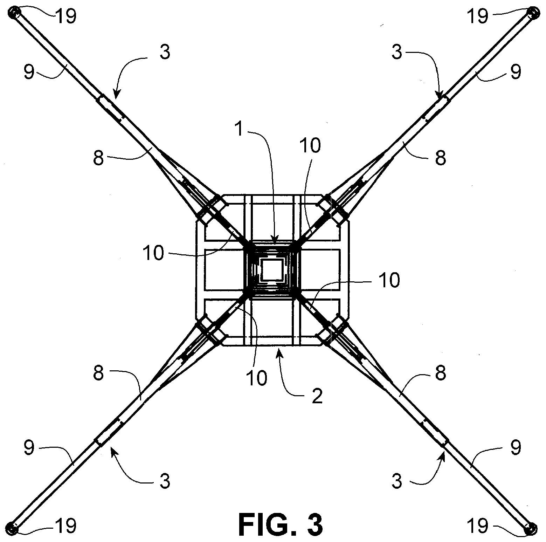

Das in den Figuren 1 bis 5 dargestellte Gestell besteht aus einer teleskopisch ausziehbaren Tragsäule 1 und einem Basisgestell 2 mit im Wesentlichen quadratischer Grundfläche, an dem vier schwenkbare Beine 3 angelenkt sind. Die Tragsäule 1 besteht aus vier Segmenten 4, 5, 6, 7. Die vier Segmente 4, 5, 6, 7 sind ineinander verschiebbar. Innerhalb der Tragsäule 1 angeordnete Hydraulikzylinder (nicht dargestellt) ermöglichen ein Ausschieben der Segmente 4, 5, 6 aus dem unteren Segment 7 in die in den Figuren 1 und 2 dargestellte Position. Das untere Segment 7 der Tragsäule 1 ist an seinem unteren Ende mit dem Basisgestell 2 verschweißt. Insbesondere die Figuren 1 und 2 zeigen, dass Spannstäbe 16 die Ausrichtung des unteren Segmentes 7 der Tragsäule 1 zum Basisrahmen 2 stabilisieren. Wenn die Wandstärke des Stahls des Segments 7 sowie der Vierkant-Rohre des Basisrahmens 2 hinreichend groß ist, sind die von Schweißnähten zwischen diesen Elementen aufnehmbaren Kräfte ausreichend groß, so dass die Spannstäbe 16 entfallen können.

Das Basisgestell 2 ist als Schweißkonstruktion ausgebildet und besteht aus mehreren Stahlprofilen, insbesondere aus Vierkant-Rohren oder oder anderen Hohlprofilen aus Stahl. Die Stahlprofile des Basisgestells 2 sind zu einer gitterartigen Struktur zusammengeschweißt, welche in der Praxis eine Länge und Breite von ca. 2,5 m aufweisen kann.

Jedes Bein 3 besteht aus einem ersten schwenkbaren Beinsegment 8, welches über einen Scharnierbolzen schwenkbar mit dem Basisgestell 2 verbunden ist. Ein ausziehbares Beinsegment 9 ist in jeweils ein schwenkbares Beinsegment 8 eingeschoben, sodass die Beinlänge sich durch Ausziehen des ausziehbaren Beinsegments 9 im Wesentlichen verdoppeln lässt. Auch innerhalb des Beins 3 sind Hydraulikzylinder (nicht dargestellt) angeordnet, welche die Beinsegmente 8, 9 des Beins zueinander verschieben. Bei einer alternativen Ausführungsform können außenliegende Hydraulikzylinder verwendet werden, die zum Beispiel parallel zu einer seitlichen Außenfläche des Beins 3 angeordnet sind. Es ist aber zu beachten, dass jedes Bein 3 auch einstückig und nicht längenveränderbar ausgebildet sein kann. In diesem Fall sind Stützfüße 19 unmittelbar an dem einstückigen Bein 3 angebracht. Ein derartiges Gestell hat im Betriebszustand die vier Stützfüße 19 in den vier Ecken eines Quadrats mit einer Seitenlänge von etwa 6 m und einer Diagonalen von über 8 m. Diese Aufstandsfläche ist für viele Ausführungsformen des Gebläses ausreichend.

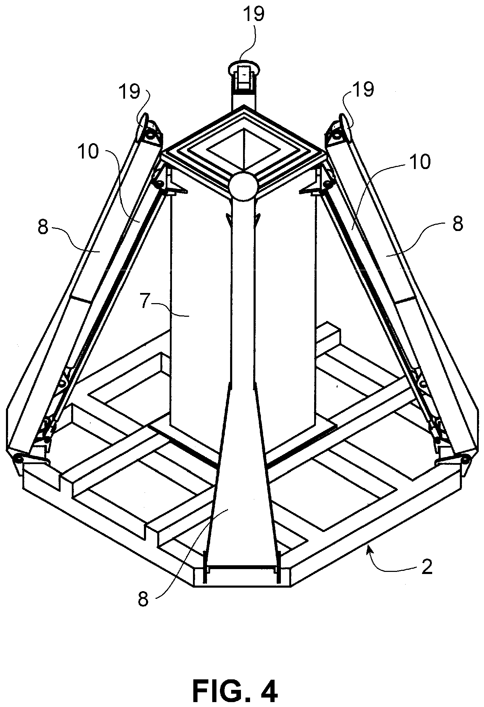

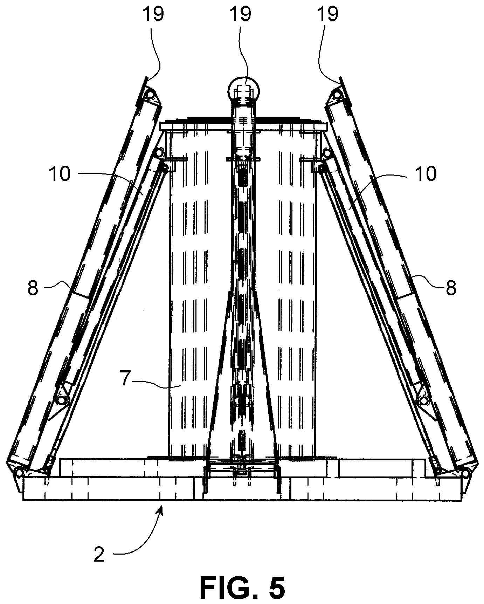

Ferner sind an den schwenkbaren Beinsegmenten 8 und im oberen Bereich des unteren Segments 7 der Tragsäule vier Hydraulikzylinder 10 angeordnet, welche die Beinsegmente 3 von der Betriebsstellung (Figuren 1 und 2), in der die Beine 3 sich nahezu waagerecht und in der Ebene des Basisgestells 2 erstrecken, in die Lagerstellung (Figur 4 und 5) verschwenken, in der die Beine 3 so weit wie möglich an die Tragsäule 1 herangezogen sind.

In den Figuren 4 und 5 ist das Gestell für den Gebläserotor in der Transportstellung und Lagerstellung zu erkennen. Alle Segmente der Tragsäule sind so weit wie möglich ineinander geschoben. Die Höhe der Tragsäule wird im Wesentlichen durch die Höhe des unteren Segments 7 bestimmt. Die Länge der schwenkbaren Beinsegmente 3 ist so gewählt, dass ihr oberes Ende im Wesentlichen auf der Höhe des oberen Endes der unteren Segmente 7 der Tagsäulen liegt, wenn die schwenkbaren Beinsegmente 3 gegen die Tragsäule 1 geschwenkt sind. Die Gesamthöhe des zusammengelegten Gestells liegt bei der dargestellten Ausführungsform unter 3 m. Die Breite und Länge des Basisgestells 2 liegt in der Größenordnung von 2,50 m. Auf diese Weise ist das Gestell ohne weiteres im Straßenverkehr transportierbar und günstig einlagerbar. Wenn das Gestell nicht über öffentliche Verkehrswege oder unter Brücken hindurch transportiert werden muss, kann es auch mit einer größeren Gesamthöhe in zusammengelegtem Zustand ausgeführt werden.

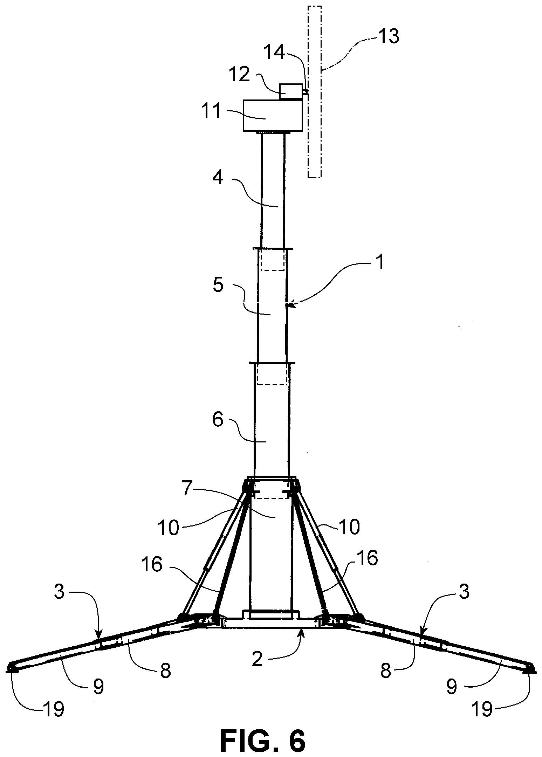

Die Figur 6 zeigt ein Gebläse mit dem beschriebenen Gestell. Am oberen Ende des oberen Segments 4 der Tragsäule 1 befindet sich eine Aufnahme, auf der der Antriebsmotor 11 für das Gebläse befestigt ist. Auf den Antriebsmotor 11 ist ein Getriebe 12 aufgesetzt, welches die Drehzahl der Motorwelle in die Drehzahl des Gebläserotors 13 übersetzt. An der Ausgangswelle 14 des Getriebes 12 sind die Rotorblätter des Gebläserotors 13 befestigt. Die Ausgangswelle 14 des Getriebes kann als Hohlwelle ausgebildet werden, über die ein Fluid in die von dem Gebläserotor 13 erzeugte Windröhre eingeblasen werden kann.

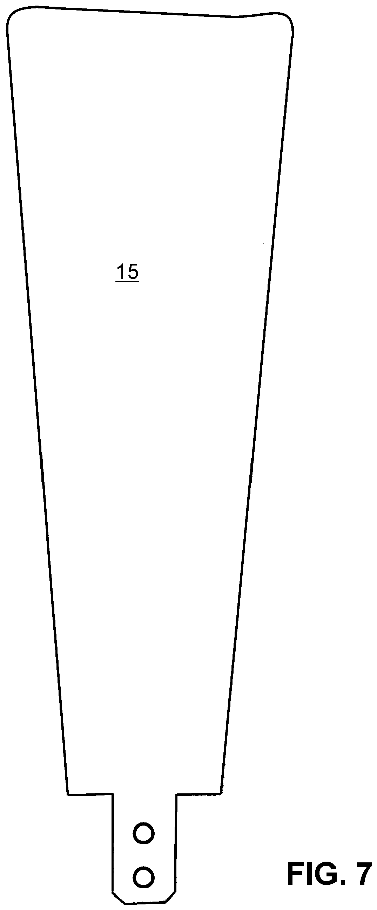

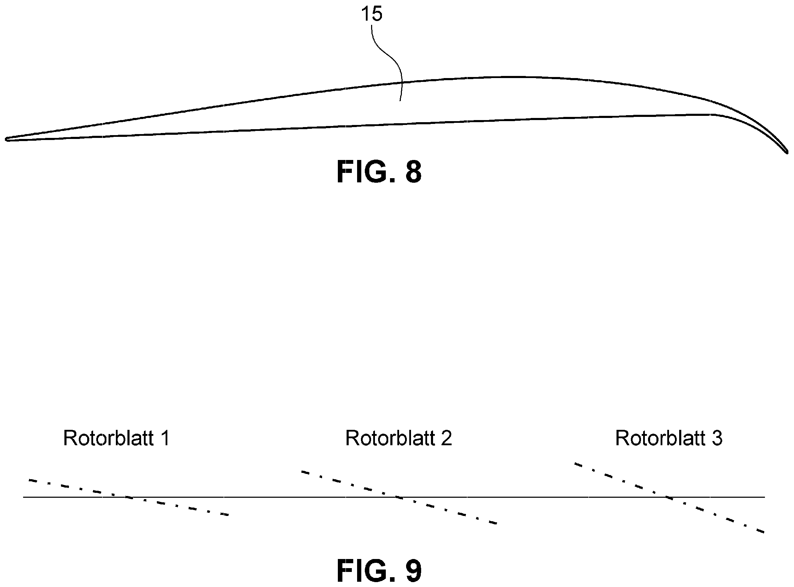

Die Figuren 7 bzw. 8 zeigen die Kontur eines Rotorblatts 15 bzw. das stirnseitige Profil eines Rotorblatts 15, welches zur Bildung des Gebläserotors 13 verwendet werden kann. Es ist zu erkennen, dass das Rotorblatt 15 ein auftriebserzeugendes Profil mit unterschiedlicher Länge des Strömungswegs an der Oberseite und an der Unterseite aufweist. Ferner weist die hintere Profilkante eine Krümmung auf, welche die Strömungsgeschwindigkeit in der entstehenden Windröhre begünstigt. Das Rotorblatt hat eine geringfügig trapezförmige Kontur, dass heißt, dass seine Breite nahe der Nabe des Rotors kleiner ist als nahe des freien Endes des Rotorblatts 15. Das Rotorblatt 15 erzeugt in seinem radial äußeren Bereich eine größere Abströmgeschwindigkeit als nahe der Mitte des Rotors. Dieser Effekt wird durch die trapezförmige Rotorblattform und die Krümmung des Rotorblatts 15 im Bereich der Abströmkante, welche im radial äußeren Bereich ausgeprägter ist, als nahe der Mitte, verstärkt. Durch das Geschwindigkeitsprofil mit von Innen nach Außen zunehmenden Abströmgeschwindigkeiten entsteht eine stabile Windröhre, die auch in großen Abständen von 50 m und mehr vom Gebläserotor deutlich messbare Strömungen hervorruft.

Ein Rotor kann beispielsweise drei, vier oder fünf derartige Rotorblätter aufweisen. Aufeinander folgende Rotorblätter können unterschiedliche Anstellwinkel aufweisen. Fig. 9 zeigt die Anstellwinkel dreier aufeinander folgender Rotorblätter. Diese Figur zeigt strichpunktiert die Sehnen der Profile der Rotorblätter 1, 2 und 3, wobei der durchgehende Strich die Bewegungsrichtung der Rotorblätter darstellt. In der Praxis betragen die Anstellwinkel aufeinanderfolgender Rotorblätter eines Rotors mit drei Rotorblättern beispielsweise 10°, 12°, 14°.

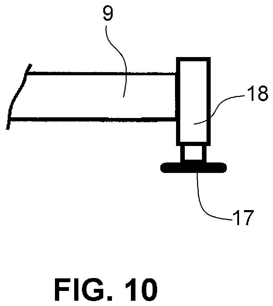

Die Fig. 10 zeigt eine alternative Ausführungsform der freien Enden der ausziehbaren Beinsegmente 9. Bei der oben beschriebenen Ausführungsform ist am freien Ende jedes ausziehbaren Beinsegments ein ortsfester Stützfuß 19 befestigt. Bei der alternativen Ausführungsform der Fig. 10 ist am Ende des ausziehbaren Beinsegments 9 ein Hydraulikzylinder 18 befestigt, der eine nach unten aus dem Zylinder herausbewegbare Stange aufweist. Der Stützfuß 17 ist am Ende dieser Stange befestigt. Die vier Beine 3 können alle mit derartigen Hydraulikzylindern 18 versehen sein, die jeweils eine Antriebsvorrichtung für einen Stützfuß 17 bilden und es ermöglichen, Höhenunterschiede der Aufstandspunkte der Stützfüße 17 des Gestells auszugleichen. Eine speicherprogrammierbare Steuerung und eine elektronische Wasserwaage können verwendet werden, um beim Aufstellen des Gestells die Hydraulikzylinder 18 aller vier Beine derart zu betätigen, dass das Basisgestell 2 exakt waagerecht ausgerichtet ist.

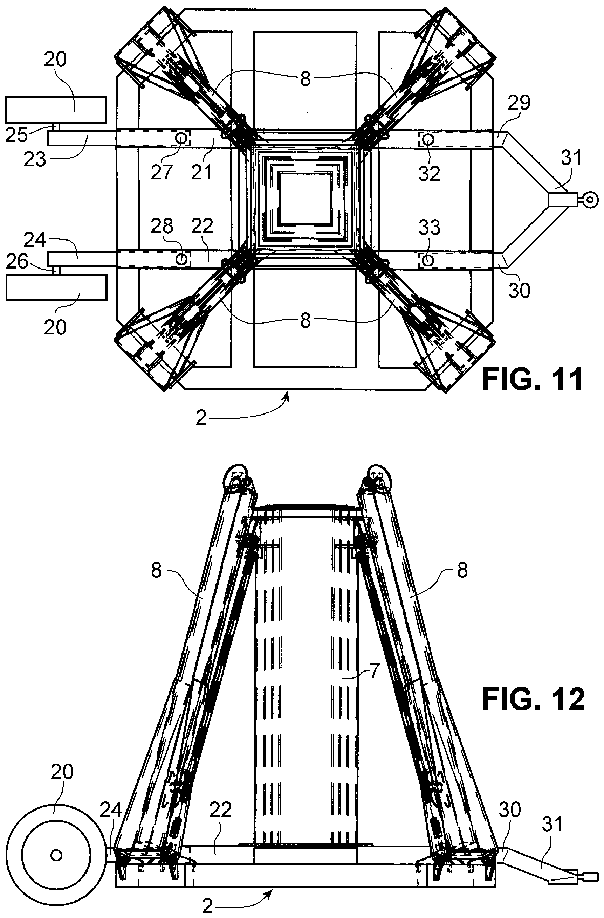

Die Fig. 11 und 12 zeigen eine Draufsicht und eine Seitenansicht eines Gestells, das mit Laufrädern für den Transport zum Einsatzort versehen ist. Für die Versendung über längere Strecken kann das Gestell auf einen Hänger oder in einen Container gestellt werden. Der Transport zum Einsatzort kann mit Laufrädern 20 geschehen, die an dem Basisgestell 2 befestigt werden. Das Basisgestell 2 weist zwei zueinander parallele und an ihren Stirnseiten offene Hohlprofile 21,22 auf. In jedes der Hohlprofile 21,22 ist eine Strebe 23,24 eingesteckt, an deren freiem Ende eine Drehachse 25,26 für ein Laufrad 20 befestigt ist. Jede Strebe 23,24 ist durch einen Sicherungsbolzen 27,28 in dem Hohlprofil 21,22 arretiert. In das gegenüberliegende Ende der Hohlprofile 21,22 sind zwei Streben 29, 30 eingesteckt, die mit einer Deichsel 31 verbunden sind. Auch diese Streben 29,30 sind mit Sicherungsbolzen 32,33 arretiert. Die Deichsel 31 kann an einem Zugfahrzeug, z.B. einem Traktor, befestigt werden, so dass das Gestell auf den Laufrädern 20 zum Einsatzort gezogen werden kann. Mittels Hydraulikzylindern (nicht dargestellt) kann das Gestell von den Laufrädern 20 auf den Boden abgesenkt werden.

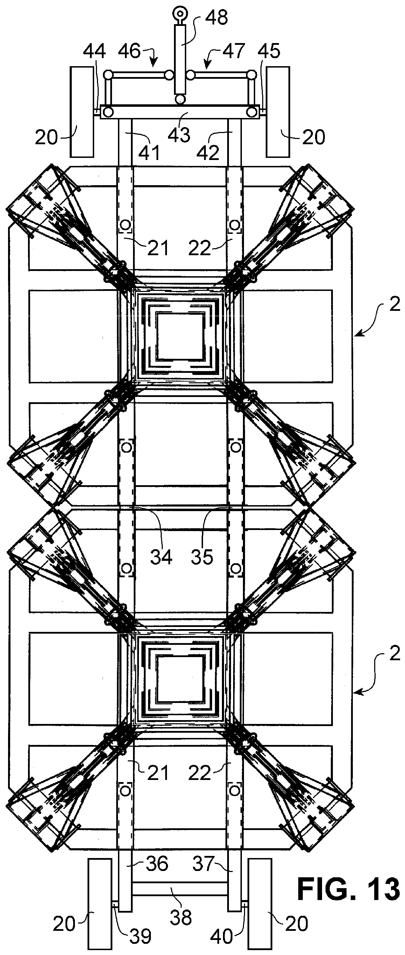

Fig. 13 zeigt eine Draufsicht zweier miteinander verbundener Gestelle. Gerade Verbindungsstreben 34,35 sind in die einander gegenüberliegenden Hohlprofile 21,22 der zwei dargestellten Basisgestelle 2 eingesteckt. Hierdurch werden die Basisgestelle 2 miteinander verbunden. In die freien Enden der Hohlprofile 21,22 des in Fig. 13 unten dargestellten Basisgestells 2 sind zwei Streben 36,37 einer starren Achsanordnung eingesteckt, bei der die Streben 36,37 durch eine Querstrebe 38 miteinander verbunden sind und die die Drehachsen 39,40 für zwei Laufräder 20 trägt. In die freien Enden der Hohlprofile 21,22 des in Fig. 13 oberen Basisgestells 2 sind zwei Streben 41,42 eingesteckt, welche Bestandteil einer lenkbaren Achsanordnung sind. Auch die Streben 41,42 werden durch eine Querstrebe 43 miteinander verbunden, an deren Enden die Laufräder 20 befestigt sind. Die Drehachsen 44,45 der Laufräder 20 sind über Lenkgestänge 46, 47 mittels der Deichsel 48 lenkbar. Aufgrund der lenkbaren Vorderachsanordnung ist der Zug aus zwei Gestellen manövrierbar. Es lassen sich auf ähnliche Weise auch mehr als zwei Gestelle miteinander verbinden.

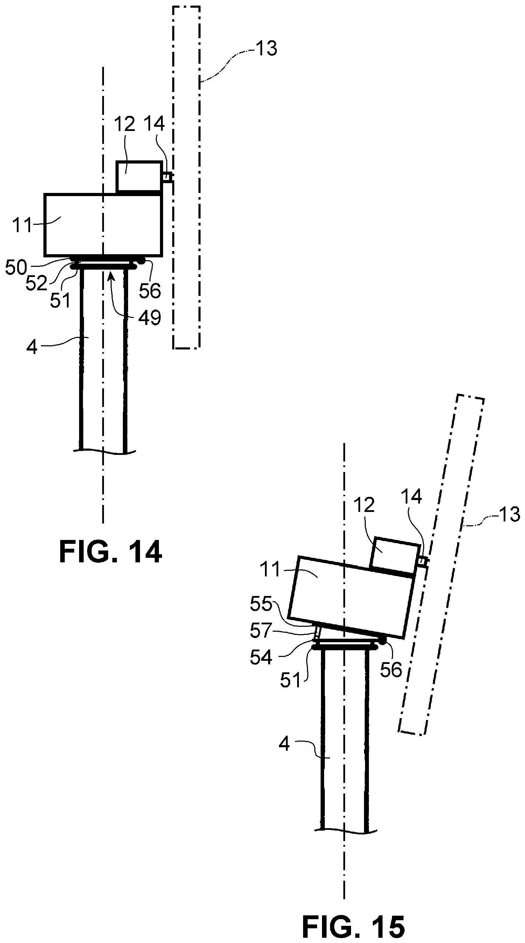

Die Fig. 14 und Fig. 15 zeigen das obere Segment 4 der Tragsäule 1 in vergrößerter Seitenansicht, wobei die Aufnahme 49 für den Antriebsmotor 11 detailliert dargestellt ist. Es ist zu erkennen, dass die Aufnahme 49 zwei Tragplatten 50,51 aufweist, zwischen denen ein Drehlager 52 angeordnet ist. Das Drehlager 52 ist hier ein Wälzlager und ermöglicht es, den Antriebsmotor 11 um die Längsachse 53 des Segments 4 der Tragsäule zu drehen, die in Fig. 14 und Fig. 15 als strichpunktierte Linie dargestellt ist. Es können aber auch andere geeignete Lagerkonstruktionen verwendet werden.

In Fig. 15 ist zu erkennen, dass die obere Tragplatte 51 aus zwei zueinander verschwenkbaren Platten 54 und 55 besteht, die über ein Schwenklager 56 miteinander verbunden sind. Ferner ist in Fig. 15 schematisch ein kleiner Hydraulikzylinder 57 zu erkennen, der einen Schwenkantrieb bildet und ein Verschwenken der oberen Platte 55 zur unteren Platte 54 bewirkt. Auch die Drehung des Antriebsmotors 11 kann durch einen entsprechenden Drehantrieb (nicht dargestellt) bewirkt werden. Die Antriebe können zusammen mit der Drehzahl des Antriebsmotors 11 von einer gemeinsamen Steuerung gesteuert werden, so dass zum Beispiel eine kontinuierliche Drehung gekoppelt wird mit verschiedenen, vom Drehwinkel abhängigen Schwenkpositionen. Auch kann die Drehzahl des Antriebsmotors 11 abhängig von dessen Drehwinkel gesteuert werden. Auf diese Weise kann der gesamte Bereich um das Gestell herum von der durch den Gebläserotor erzeugten Windröhre überstrichen werden und die Intensität und Länge dieser Windröhre winkelabhängig variiert werden, so dass das Gebläse ein individuelles, von seinem Einsatzort abhängiges Kennfeld der Winderzeugung ermöglicht.

Es ist anzumerken, dass die Darstellung der Drehlagerung und Schwenklagerung des Antriebsmotors 11 in den Figuren 14 und 15 nur den Zwecken der Veranschaulichung dient. Die Lager können anders als dargestellt ausgebildet werden. Auch für die Antriebe, welche die Drehung oder das Verschwenken des Antriebsmotors 11 bewirken, lassen sich beliebige Antriebsvorrichtungen verwenden, vorausgesetzt, dass sie die erforderlichen Leistungen erbringen.

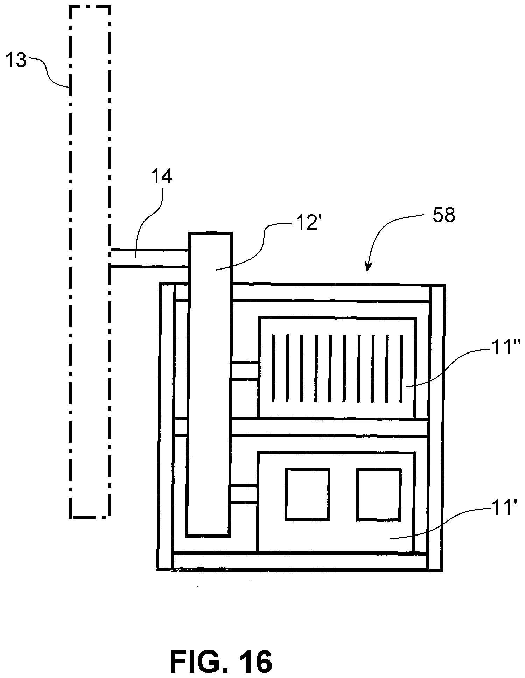

Bei der in Fig. 16 dargestellten Ausführungsform sind zum Antrieb des Gebläserotors 13 in einem Gehäuse 58 sowohl ein Verbrennungsmotor 11' als auch ein Elektromotor 11" angeordnet. Zum Beispiel kann der Verbrennungsmotor 11' als zweizylindriger, mit Dieselkraftstoff betriebener Boxermotor ausgebildet sein. Der Elektromotor 11" ist vorzugswese mit einer Steuerungselektronik mit Frequenzumrichter versehen, die den Betrieb des Elektromotors 11" auch als Generator ermöglichen kann. Beide Motoren können eine Leistung zwischen 110 und 140 kW, aber auch über 200 KW aufweisen. Je nach Anbindung des Freilandgebläses an ein Stromnetz kann der Gebläserotor 13 entweder über den Elektromotor 11" oder über den Verbrennungsmotor 11' betrieben werden.

Das Getriebe 12' ermöglicht die wahlweise Zuschaltung eines der beiden Motoren 11', 11" oder auch beider Motoren 11' und 11", wenn ein besonders hohes Drehmoment erforderlich ist. Bei der Anwesenheit eines Elektromotors 11" kann das Freilandgebläse auch als Windrad betrieben werden. In diesem Fall ist die Steuerungselektronik des Elektromotors 11" so zu schalten, dass bei Einwirken eines Drehmoments auf die Ausgangswelle 14 durch den Elektromotor 11" Strom erzeugt wird. Wenn der Gebläserotor 13 nicht zum Erzeugen einer Luftströmung gebraucht wird, kann durch den als Generator wirkenden Elektromotor 11" Strom erzeugt werden, der entweder in ein Stromnetz oder einen Energiespeicher geleitet wird.

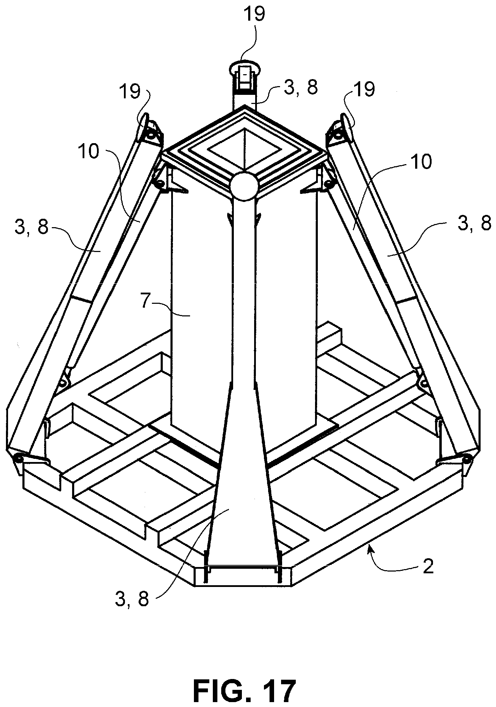

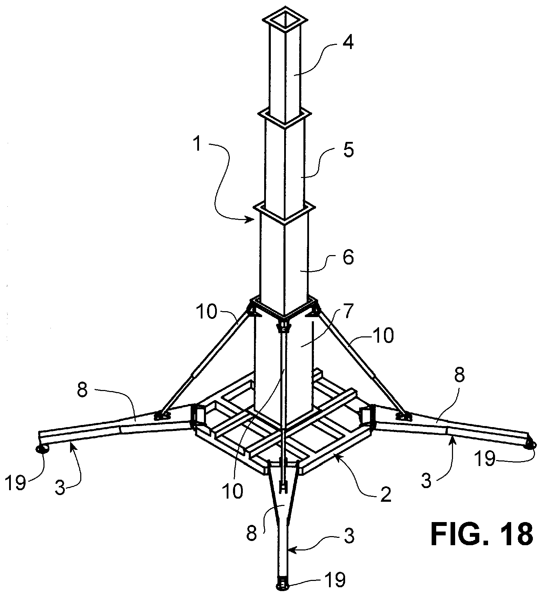

In der bisherigen Zeichnungsbeschreibung wurde ein Gestell mit teleskopierbaren, längenverstellbaren Beinen 3 beschrieben. Bei der in den Figuren 17 und 18 dargestellten Ausführungsform des Gestells besteht jedes der Beine 3 nur aus dem schwenkbaren Beinsegment 8, so dass die Beine 3 nicht längenverstellbar sind. Der Stützfuß 19 ist unmittelbar am Ende jedes der Beinsegmente 8 befestigt. Die Beine 3 dieser Ausführungsform weisen eine Länge von ca. 2,50 m auf, so dass bei einer Breite und Länge des Basisgestells 2 von ca. 2,50 m bei vollständig aufgeklappten Beinen 3 die Stützfüße 19 in den Ecken eines Quadrats mit einer Kantenlänge in der Größenordnung von ca. 6 m liegt (s. Fig. 18). Dies ist in der Regel ausreichend, um die Kräfte des Rotors zuverlässig über das Gestell am Boden abzustützen. Falls die Stabilität mit dieser reduzierten Stützfläche erhöht werden soll, können zum Beispiel die Stützfüße 19 mit Erdankern (nicht dargestellt) im Erdreich verankert werden. Spannstäbe, welche die Ausrichtung des unteren Segmentes 7 der Tragsäule 1 zum Basisrahmen 2 stabilisieren, fehlen bei dieser Ausführungsform.

### Bezugszeichenliste

- 1: Tragsäule
- 2: Basisgestell
- 3: Bein
- 4: oberes Segment
- 5: Segment
- 6: Segment
- 7: unteres Segment
- 8: schwenkbares Beinsegment
- 9: ausziehbares Beinsegment
- 10: Hydraulikzylinder
- 11: Antriebsmotor
- 11': Verbrennungsmotor
- 11": Elektromotor
- 12: Getriebe
- 12': Getriebe
- 13: Gebläserotor
- 14: Ausgangswelle, Hohlwelle
- 15: Rotorblatt
- 16: Spannstab
- 17: Stützfuß
- 18: Hydraulikzylinder, Antriebsvorrichtung
- 19: ortsfester Stützfuß
- 20: Laufrad
- 21: Hohlprofil
- 22: Hohlprofil
- 23: Strebe
- 24: Strebe
- 25: Drehachse
- 26: Drehachse
- 27: Sicherungsbolzen
- 28: Sicherungsbolzen
- 29: Strebe
- 30: Strebe
- 31: Deichsel
- 32: Sicherungsbolzen
- 33: Sicherungsbolzen
- 34: Verbindungsstrebe
- 35: Verbindungsstrebe
- 36: Strebe
- 37: Strebe
- 38: Querstrebe
- 39: Drehachse
- 40: Drehachse
- 41: Strebe
- 42: Strebe
- 43: Querstrebe
- 44: Drehachse
- 45: Drehachse
- 46: Lenkgestänge
- 47: Lenkgestänge
- 48: Deichsel
- 49: Aufnahme
- 50: Tragplatte
- 51: Tragplatte
- 52: Drehlager
- 53: Längsachse
- 54: untere Platte
- 55: obere Platte
- 56: Schwenklager
- 57: Hydraulikzylinder
- 58: Gehäuse

## Patentansprüche

1. Gebläse zum Schutz landwirtschaftlicher Anpflanzungen, mit mindestens einem Antriebsmotor (11), einem Gebläserotor (13) und einem Gestell, das eine Tragsäule (1) aufweist, welche aus mehreren ineinandergeschobenen Segmenten (4,5,6,7) besteht, die zur Veränderung der Länge der Tragsäule (1) in axialer Richtung zueinander verschiebbar sind, wobei am oberen Segment (4) der Tragsäule (1) der Gebläserotor (13) befestigbar ist, einem Basisgestell (2), in dessen mittlerem Bereich die Tragsäule (1) befestigt ist, **gekennzeichnet dadurch, dass** an dem Basisgestell vier Beine (3) verschwenkbar befestigt sind, wobei an den schwenkbaren Beinen (3) und im oberen Bereich des unteren Segments (7) der Tragsäule jeweils ein Hydraulikylinder (10) angeordnet ist, welcher das jeweilige Bein (3) von einer Betriebsstellung in eine Lagerstellung verschwenkt, wobei die Beine (3) in der Betriebsstellung sich nahezu waagerecht und in der Ebene des Basisgestells (2) erstrecken und in der Lagerstellung so weit wie möglich an die Tragsäule (1) herangezogen sind.

2. Gebläse nach Anspruch 1, **dadurch gekennzeichnet, dass** mindestens eines der Beine (3) längenverstellbar ist und dass das längenverstellbare Bein (3) vorzugsweise aus mehreren ineinandergeschobenen Beinsegmenten (8,9) besteht, die zur Veränderung der Länge des Beins (3) in axialer Richtung zueinander verschiebbar sind.

3. Gebläse nach einem der vorangehenden Ansprüche, **dadurch gekennzeichnet, dass** es mindestens eine Antriebsvorrichtung aufweist, die die Segmente der Tragsäule (1) zueinander verschiebt und/oder die Beinsegmente (8,9) des Beins (3) zueinander verschiebt und/oder die Schwenkstellung des Beins (3) verändert.

4. Gebläse nach einem der vorangehenden Ansprüche, **dadurch gekennzeichnet, dass** mindestens ein Bein (3) einen verstellbaren Stützfuß (17) aufweist.

5. Gebläse nach Anspruch 4, **dadurch gekennzeichnet, dass** es eine Antriebsvorrichtung (18) aufweist, die die Position des verstellbaren Stützfußes (17) verstellt.

6. Gebläse nach einem der vorangehenden Ansprüche, **dadurch gekennzeichnet, dass** das obere Segment (4) der Tragsäule (1) nahe dem oberen Ende eine Aufnahme (49) für mindestens einen Antriebsmotor (11) aufweist, der den Gebläserotor (13) antreibt.

7. Gebläse nach Anspruch 6, **dadurch gekennzeichnet, dass** der mindestens eine Antriebsmotor (11) ein Verbrennungsmotor, ein Elektromotor oder eine Turbine oder eine Kombination hiervon ist.

8. Gebläse nach Anspruch 6 oder 7, **dadurch gekennzeichnet, dass** die Aufnahme (49) mindestens eines der folgenden Merkmale aufweist:
• ein Drehlager (52), welches eine Drehung des mindestens einen Antriebsmotors (11) in Bezug auf die Tragsäule (1) ermöglicht;
• ein Schwenklager (56), welches ein Verschwenken des mindestens einen Antriebsmotors (11) in Bezug auf die horizontale Ebene ermöglicht;
• einen Drehantrieb, der eine Drehung des mindestens einen Antriebsmotors (11) in Bezug auf die Tragsäule bewirkt;
• einen Schwenkantrieb, der ein Verschwenken des mindestens einen Antriebsmotors (11) in Bezug auf die horizontale Ebene bewirkt.

9. Gebläse nach einem der vorangehenden Ansprüche, **gekennzeichnet durch** mindestens eines der folgenden Merkmale:
• die maximale Höhe der Tragsäule (1) beträgt zwischen 6 und 15 m;
• der maximale Abstand des Endes eines Beins (3) von der Mitte des Basisgestells (2) beträgt zwischen 3 und 8 m;
• die minimale Höhe der Tragsäule (1) beträgt zwischen 2 und 3,5 m;
• die minimale Länge und Breite des Basisgestells (2) beträgt zwischen 2 und 3 m.

10. Gebläse nach einem der vorangehenden Ansprüche, **dadurch gekennzeichnet, dass** das Basisgestell (2) mindestens ein Hohlprofil (21,22) aufweist und dass mindestens eine Strebe (23,24,29,30,36,37,41, 42) in das Hohlprofil (21,22) einsteckbar und dort arretierbar ist, wobei die mindestens eine Strebe (23,24,29,30,36,37,41,42) vorzugsweise mindestens eines der folgenden Merkmale aufweist:
• sie ist mit einem Laufrad (20) verbunden, mit dem das Gestell verfahrbar ist;
• sie ist mit einer Deichsel (31,48) verbunden, mit der das Gestell an einem Zugfahrzeug befestigt werden kann;
• einen weiteren Strebenabschnitt, der in das Hohlprofil (21,22) eines zweiten Basisgestells (2) einsteckbar und dort arretierbar ist.

11. Gebläse nach einem der vorangehenden Ansprüche, **dadurch gekennzeichnet, dass** der mindestens eine Antriebsmotor (11) eine Kombination aus Verbrennungsmotor (11') und Elektromotor (11") aufweist und dass er ein Getriebe aufweist, mit dem der Verbrennungsmotor (11') und der Elektromotor (11") mit dem Gebläserotor (13) koppelbar ist.

12. Gebläse nach einem der vorangehenden Ansprüche, **dadurch gekennzeichnet, dass** der Gebläserotor (13) auf einer Hohlwelle (14) befestigt ist, wobei über eine Zufuhrleitung ein Fluid in diese Hohlwelle injizierbar ist.

13. Gebläse nach einem der vorangehenden Ansprüche, **dadurch gekennzeichnet, dass** der Durchmesser des Gebläserotors (13) zwischen 1,5 und 5 m beträgt.

14. Gebläse nach einem der vorangehenden Ansprüche, **dadurch gekennzeichnet, dass** die aufeinanderfolgenden Rotorblätter (15) des Gebläserotors (13) verschiedene Anstellwinkel aufweisen.

## Claims

1. Blower for protecting agricultural plantations, with at least one drive motor (11), a blower rotor (13) and a frame which has a supporting column (1) consisting of a plurality of telescoped segments (4, 5, 6, 7), which are displaceable relative to one another in the axial direction in order to change the length of the support column (1), wherein the blower rotor (13) can be fastened to the upper segment (4) of the support column (1), a base frame (2), in the central region of which the support column (1) is fastened, **characterized in that** four legs (3) are pivotably attached to the base frame, wherein a hydraulic cylinder (10) is arranged on each of the pivotable legs (3) and in the upper region of the lower segment (7) of the support column, which hydraulic cylinder pivots the respective leg (3) from an operating position into a storage position, wherein the legs (3) extend almost horizontally and in the plane of the base frame (2) in the operating position and are drawn as far as possible against the support column (1) in the storage position.

2. Blower according to claim 1, **characterized in that** at least one of the legs (3) is adjustable in length and **in that** the length-adjustable leg (3) preferably consists of a plurality of telescoped leg segments (8, 9) which are displaceable relative to one another in the axial direction in order to change the length of the leg (3).

3. Blower according to any one of the preceding claims, **characterized in that** it comprises at least one drive device which displaces the segments of the support column (1) relative to one another and/or displaces the leg segments (8, 9) of the leg (3) relative to one another and/or changes the pivoting position of the leg (3).

4. Blower according to any one of the preceding claims, **characterized in that** at least one leg (3) has an adjustable support foot (17).

5. Blower according to claim 4, **characterized in that** it comprises a drive device (18) which adjusts the position of the adjustable support foot (17).

6. Blower according to any one of the preceding claims, **characterized in that** the upper segment (4) of the support column (1) has, near the upper end, a mount (49) for at least one drive motor (11) which drives the blower rotor (13).

7. Blower according to claim 6, **characterized in that** the at least one drive motor (11) is an internal combustion engine, an electric motor or a turbine or a combination thereof.

8. Blower according to claim 6 or 7, **characterized in that** the mount (49) has at least one of the following features:
• a pivot bearing (52), which allows rotation of the at least one drive motor (11) with respect to the support column (1);
• a swivel bearing (56) which allows the at least one drive motor (11) to swivel with respect to the horizontal plane
• a rotary drive causing rotation of the at least one drive motor (11) with respect to the support column;
• a swivel drive which causes the at least one drive motor (11) to swivel with respect to the horizontal plane.

9. Blower according to any one of the preceding claims, **characterized by** at least one of the following features
• the maximum height of the support column (1) is between 6 and 15 m;
• the maximum distance of the end of a leg (3) from the centre of the base frame (2) is between 3 and 8 m;
• the minimum height of the support column (1) is between 2 and 3,5 m;
• the minimum length and width of the basic frame (2) is between 2 and 3 m.

10. Blower according to one of the preceding claims, **characterized in that** the base frame (2) has at least one hollow profile (21, 22) and that at least one strut (23, 24, 29, 30, 36, 37, 41, 42) can be inserted into the hollow profile (21, 22) and locked therein, the at least one strut (23, 24, 29, 30, 36, 37, 41, 42) preferably having at least one of the following features:
• it is connected to a wheel (20) with which the frame can be moved
• it is connected to a drawbar (31, 48) with which the frame can be attached to a towing vehicle
• a further strut section which can be inserted into the hollow section (21, 22) of a second base frame (2) and locked therein.

11. Blower according to one of the preceding claims, **characterized in that** the at least one drive motor (11) comprises a combination of combustion engine (11') and electric motor (11") and that it comprises a transmission by means of which the combustion engine (11') and the electric motor (11") can be coupled to the blower rotor (13).

12. Blower according to one of the preceding claims, **characterized in that** the blower rotor (13) is mounted on a hollow shaft (14), a fluid being injectable into this hollow shaft via a supply line.

13. Blower according to any one of the preceding claims, **characterized in that** the diameter of the blower rotor (13) is between 1.5 and 5 m.

14. Blower according to any one of the preceding claims, **characterized in that** the successive rotor blades (15) of the blower rotor (13) have different angles of attack.

## Revendications

1. Soufflante pour la protection de plantations agricoles, avec au moins un moteur d'entraînement (11), un rotor de soufflante (13) et un châssis qui comporte une colonne de support (1) constituée de plusieurs segments (4, 5, 6, 7) télescopiques, qui sont déplaçables les uns par rapport aux autres dans la direction axiale pour modifier la longueur de la colonne de support (1), le rotor de soufflante (13) pouvant être fixé sur le segment supérieur (4) de la colonne de support (1), un cadre de base (2) dans la zone centrale duquel est fixée la colonne de support (1), **caractérisée en ce que** quatre jambes (3) sont montées de façon pivotantes sur le cadre de base, un vérin hydraulique (10) étant disposé sur les jambes pivotantes (3) et dans la zone supérieure du segment inférieur (7) de la colonne de support, le vérin hydraulique (10) faisant pivoter la jambe (3) respective d'une position de travail à une position de stockage, les jambes (3) s'étendant dans la position de travail presque horizontalement et dans le plan du cadre de base (2) et dans la position de stockage repliées aussi loin que possible contre la colonne de support (1).

2. Soufflante selon la revendication 1, **caractérisée en ce qu'**au moins une des jambes (3) est réglable en longueur et **en ce que** la jambe (3) réglable en longueur est constituée de préférence de plusieurs segments de jambe (8, 9) télescopiques qui peuvent être déplacés les uns par rapport aux autres dans la direction axiale pour modifier la longueur de la jambe (3).

3. Soufflante selon l'une des revendications précédentes, **caractérisée en ce qu'**elle comprend au moins un dispositif d'entraînement qui déplace les segments de la colonne de support (1) les uns par rapport aux autres et/ou déplace les segments de jambe (8, 9) de la jambe (3) les uns par rapport aux autres et/ou modifie la position de pivotement de la jambe (3).

4. Soufflante selon l'une des revendications précédentes, **caractérisée en ce qu'**au moins une jambe (3) présente un pied d'appui réglable (17).

5. Soufflante selon la revendication 4, **caractérisée en ce qu'**elle comprend un dispositif d'entraînement (18) qui ajuste la position du pied d'appui réglable (17).

6. Soufflante selon l'une des revendications précédentes, **caractérisée en ce que** le segment supérieur (4) de la colonne de support (1) présente, à proximité de l'extrémité supérieure, un logement (49) pour au moins un moteur d'entraînement (11) qui entraîne le rotor de la soufflante (13).

7. Soufflante selon la revendication 6, **caractérisée en ce que** le au moins un moteur d'entraînement (11) est un moteur à combustion interne, un moteur électrique ou une turbine ou une combinaison de ceux-ci.

8. Soufflante selon la revendication 6 ou 7, **caractérisée en ce que** le récipient (49) présente au moins une des caractéristiques suivantes
• un palier de rotation (52), qui permet la rotation du au moins un moteur d'entraînement (11) par rapport à la colonne de support (1);
• un palier de pivotement (56) qui permet à l'au moins un moteur d'entraînement (11) de pivoter par rapport au plan horizontal
• un entraînement rotatif provoquant la rotation du au moins un moteur d'entraînement (11) par rapport à la colonne de support ;
• un entraînement de pivotement qui fait pivoter le au moins un moteur d'entraînement (11) par rapport au plan horizontal.

9. Soufflante selon l'une des revendications précédentes, **caractérisées par au** moins l'une des caractéristiques suivantes
• la hauteur maximale de la colonne de support (1) est comprise entre 6 et 15 m ;
• la distance maximale de l'extrémité d'une jambe (3) par rapport au centre du cadre de base (2) est comprise entre 3 et 8 m ;
• la hauteur minimale de la colonne de support (1) est comprise entre 2 et 3,5 m ;
• la longueur et la largeur minimales du cadre de base (2) sont comprises entre 2 et 3 m.

10. Soufflante selon l'une des revendications précédentes, **caractérisée en ce que** le cadre de base (2) présente au moins un profilé creux (21, 22) et **en ce qu'**au moins une entretoise (23, 24, 29, 30, 36, 37, 41, 42) peut être insérée dans le profilé creux (21, 22) et y être bloquée, l'au moins une entretoise (23, 24, 29, 30, 36, 37, 41, 42) présentant de préférence au moins l'une des caractéristiques suivantes :
• elle est reliée à une roue (20) avec laquelle le cadre peut être déplacé ;
• elle est reliée à une barre de traction (31, 48) avec laquelle le cadre peut être fixé à un véhicule tracteur ;
• une autre section d'entretoise qui peut être inséré dans le profilé creux (21, 22) d'un deuxième cadre de base (2) et y être bloqué.

11. Soufflante selon l'une des revendications précédentes, **caractérisée en ce que** le au moins un moteur d'entraînement (11) comprend une combinaison de moteur à combustion (11') et de moteur électrique (11") et qu'il comprend une transmission au moyen de laquelle le moteur à combustion (11') et le moteur électrique (11") peuvent être couplés au moteur de la soufflante (13).

12. Soufflante selon l'une des revendications précédentes, **caractérisée en ce que** le rotor de la soufflante (13) est monté sur un arbre creux (14), un fluide pouvant être injecté dans cet arbre creux par l'intermédiaire d'une conduite d'alimentation.

13. Soufflante selon l'une des revendications précédentes, **caractérisée en ce que** le diamètre du rotor de la soufflante (13) est compris entre 1,5 et 5 m.

14. Soufflante selon l'une des revendications précédentes, **caractérisée en ce que** les pales successives (15) du rotor de la soufflante (13) ont des angles d'attaque différents.
